# EUROPEAN PATENT SPECIFICATION

(11) **EP 1 510 125 B1**
(45) Date of publication and mention of the grant of the patent: **15.04.2009**
(21) Application number: 04104073.4
(22) Date of filing: 25.08.2004
(51) Int. Cl.: A01K 61/02

(54) **Method for monitoring and controlling the non-consumed food in fish farms**
Verfahren zur Überwachung und Steuerung des unverzehrtes Futters in Fischzuchtanlagen
Procédé d'observation et de contrôle de nourriture non consommée en pisciculture

(30) Priority: 26.08.2003 CL 17162003
(43) Date of publication of application: 02.03.2005
(73) Proprietor: Sociedad Comercial E Industrial Equa Limitada, Puerto Montt (CL)
(72) Inventor: CHANCEAULME WILLEMSEN, Claudio Francisco, Avda. Angelmo No 1796, Puerto Montt (CL); ALVAREZ GATICA, Raul Hernán, Avda. Angelmo No. 1796, Puerto Montt (CL)
(74) Representative: Ponti Sales, Adelaida

(56) References cited:
- GB-A- 2 322 701
- US-A- 5 732 655
- US-A- 5 961 831
- US-A1- 2003 059 494
- DATABASE WPI Section PQ, Week 200045 Derwent Publications Ltd., London, GB; Class P14, AN 2000-504774 XP002309588 -& SE 9 804 384 L (JANEKO AB) 18 June 2000 (2000-06-18)

## Description

### Field of the Invention

The present invention relates to a method for monitoring and controlling the non-consumed food in fish farms.

### Background of the Invention

One of the problems that characterizes the aquaculture is that the animals and plants involved in the farm are under the water, and the most of them can not be observed, unless by using special equipment and instrumentation.

In the case of the fish aquaculture, it is very difficult to verify in a visual and permanent way the amount of food that is consumed. The impossibility to verify the consumption in real-time originates two main problems: 1) the economic lost because of the food that is not consumed; and 2) the negative environmental impact that produces the wasted food.

The portion of food given to the fish is calculated in a theoretic way considering physical-chemistry parameters (temperature of water, amount of oxygen in the water, etc.), and biological parameters (age and size, etc.). In this calculation there are not considered other factors that may affect in a direct way the level of consumption of food by fish. For example, the stress caused by any activity related to the fish farm management may provoke that fish stop consuming food for many days. Another factor may be the time when fish get satisfied and stop consuming food. Both factors may be determined only by observation in real-time. Fish consume the food as long as it is dropped into the respective fish breeding cage, and in this process the fish must eat the pellets as long as they go downward through the water. The pellet that is not consumed, reach the bottom of the breeding cage and the environment and obviously became lost.

As a way of example, in the salmon farm related with the industrial scale, the food costs represents about the 60% of the total production costs. Therefore, the optimization in the use of the food may influence significantly the economic result of the company.

Currently, in the prior art, in a PCT searching, under IPC classifications A01K 61/02 and G01N 023/223 there are described some methods for monitoring by means of acoustic sounding, based on the Doppler effect in order to detect the particles of food inside a determined perimeter, which uses sensors arranged inside and outside the raft-cage in which the fish are kept. The inconvenient of these systems is their low reliability in the interpretation of the acoustic sensor, because it may not discriminate another element from a food particle, and may present mistakes in their statistics because it quantifies all the interferences inside its sweeping area.

PORO AB. uses a submarine camera for verifying the behavior and feeding of fish, focusing downward and using illumination systems in order to be able to observe the particles of food. The major inconvenient is that fish may be negatively affected by the illumination system.

Norcan Electrical Systems Inc. uses a submarine camera connected by a serial connection to a central feeding system. An operator is visually monitoring each raft-cage from a base station, making the necessary adjustments to the feeding system. A disadvantage in this case is that all the rafts are connected to the system, therefore the operator must verify one by one each raft-cage which makes difficult to activate properly and in the right time the feeding system.

SE 9804384 describes an automatic feeding device having a data camera recording food falling down beneath the water.

### Summary of the Invention

In the prior art there is not disclosed any system able to capture images and quantifying in real-time the non consumed food particles, by means of a images processing system, which uses a submarine camera located under the mass of fish and that stops immediately the feeding of fish or decreases the related feeding rate when the assigned limit is exceeded.

The invention introduced, comprises a system and a submarine camera located inside the cage under the big mass of fish arranged during the breeding process, providing a mean for observing the process of feeding and behavior of fish in real-time, in order to make the necessary changes in the proper time.

On the other hand, the invention provides a good mean for minimizing the negative environmental impact caused by the excess of food provided to the fish.

Besides, it can be used for controlling predators or other problems in the fish behavior. Even more, the invention is able to be used in any kind of fish farm in breeding raft-cages in which there is used mobile or static automatic or manual feeders, for feeding salmon, trout, croaker, sturgeon, carp, hake, sea bass, sea bream, tuna, eel and others.

### Brief description of the drawings

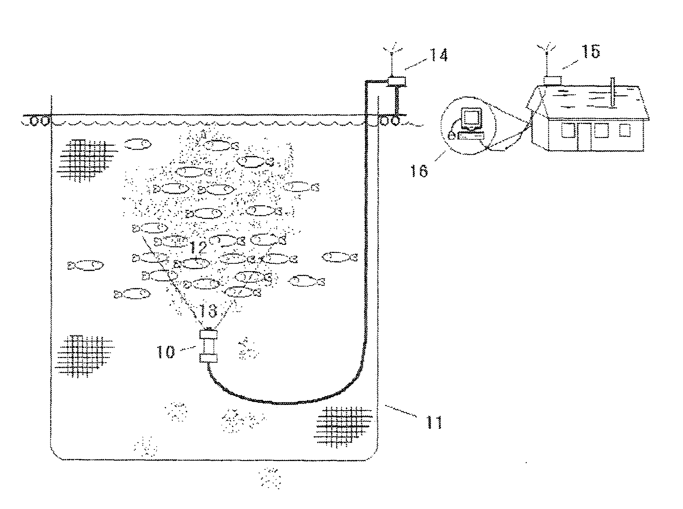

Figure 1 is a view of the elements of the invention.

### Description of the preferred embodiment

In figure 1 it is shown a submarine camera (10) located inside a fish breeding raft-cage (11) of any demersal species (i.e., the ones that swim and eat in the column of water). The submarine camera (10) must be located under the group of fish forced in the feeding zone (12) during the feeding process. Depending on the specie of fish, a skilled fish farmer will determine easily the best location for the submarine camera (10), generally near the center of the cage and between 4 and 12 meters depth.

The food is supplied in the top of the cage, and the fish (12) consume it as long as it gets inside the raft-cage (11) in which they are kept. The particles of food sink slowly through the column of water; therefore the images of the particles of non-consumed food (13) may be easily captured by the submarine camera (10).

The submarine camera (10) may be any model able to satisfy the NTSC or PAL signal requirements, preferably one of the models Equa VISION, arranged focusing upward. In order to take the signal from the submarine camera (10) to the computer (16), it is used a wire connected to a conventional transmitter (14), located in the upper part of the raft-cage. This transmitter (14) transmits a signal to a conventional receiver (15), where the signal is received and sent to the computer (16) by means of a wire. A transmitter equipment that meets perfectly well the requirements is the module TRUP VISION.

The obtained signal of the submarine camera (10), is given to the system, by means of a image processing software, preferably the HALCON of MYTec GmbH, which controls the image acquisition card (frame grabber). A proper card according to the requirements of the present invention is one of the Falcon Family of IDS Imaging GmbH.

The food particles have a shape and texture relatively clear. By mathematical algorithms commonly used for determining shape and texture, the software discriminates the images of particles having certain characteristics respect to a predefined pattern.

The software programming characteristics are the following:

The imaging processing software takes an image and makes a grey scale spectrum analysis. By means of an algorithm of shape and texture there are determined all those shapes representing a food particle. Methods like this are well known for any skilled person in that technical field. Then, the captured image is analyzed by the software by algorithms that determine, in real-time, the amount of particles of food that are passing through the feeding zone or that were not consumed by fish.

The system may display information in a graphic way, in a screen and may be integrated by an electronic interface with duplex communication, with the automatic feeding control software. It may export the information by Internet and/or magnetic means, as well as it makes possible the data acquisition.

A skilled person in this area would know how to make a recognizing algorithm like the one mentioned above and the related equations in order to develop the software that provides the information in real-time of the number of particles over the predetermined limit values. For the same reason, the invention must not be limited by the specific algorithms used. On the contrary, the scope of the invention is to be limited only by the following claims.

## Claims

1. Method for monitoring and controlling the non-consumed food in fish farms, comprising the step of locating a submarine camera (10) inside a fish breeding raft-cage (11) under the feeding zone (12) of fish in order to make images that are transmitted to a computer (16), said computer comprising an image processing software, wherein said submarine camera is focused upwardly and wherein said image processing software interprets, analyses and discriminates the images of non-consumed food particles (13) having certain characteristics in respect of a predefined pattern, quantifying said non-consumed food particles in real time and stopping or reducing the feeding rate when the assigned limit of non-consumed food particles is exceeded.

2. Method according to claim 1, **CHARACTERIZED in that** said software includes an algorithm of shape and texture for discriminating the images of particles representing a predefined pattern of non-consumed food particle.

3. Method according to claim 1 **CHARACTERIZED in that** it includes the step of controlling all the automatic feeding system.

4. Method according to claim 1 **CHARACTERIZED in that** it includes the step of recording the quantity of provided food making graphic reports.

5. Method according to claim 4 **CHARACTERIZED in that** said reports can be exported by physical means and/or through the Internet.

## Patentansprüche

1. Verfahren zur Überwachung und Steuerung von nicht konsumiertem Futter in Fischzuchtanlagen, das den Schritt des Lokalisierens einer Unterwasserkamera (10) innerhalb eines Fischaufzucht-Floßkäfigs (11) unter der Fütterungszone (12) der Fische aufweist, um Bilder zu machen, die zu einem Computer (16) übertragen werden, wobei der Computer eine Bildverarbeitungssoftware aufweist, wobei die Unterwasserkamera nach oben fokussiert ist und wobei die Bildverarbeitungssoftware die Bilder von nicht konsumierten Futterteilchen (13) interpretiert, analysiert und diskriminiert, die bestimmte Eigenschaften bezüglich eines vordefinierten Musters haben, Quantifizieren der nicht konsumierten Futterteilchen in Echtzeit und Unterbrechen bzw. Reduzieren der Fütterungsrate, wenn die gesetzte Grenze von nicht konsumierten Futterteilchen überschritten ist.

2. Verfahren nach Anspruch 1, **dadurch gekennzeichnet, dass** die Software einen Algorithmus der Form und Beschaffenheit zum Diskriminieren der Teilchenbilder umfasst, die ein vorbestimmtes Muster von nicht konsumierten Futterteilchen darstellen.

3. Verfahren nach Anspruch 1, **dadurch gekennzeichnet, dass** es den Schritt des Steuerns des gesamten automatischen Fütterungssystems umfasst.

4. Verfahren nach Anspruch 1, **dadurch gekennzeichnet, dass** es den Schritt des Aufnehmens der Menge des zugeführten Futters einschließlich der Erstellung von graphischen Darstellungen umfasst.

5. Verfahren nach Anspruch 4, **dadurch gekennzeichnet, dass** die Darstellungen durch physikalische Einrichtungen und/oder über das Internet exportiert werden können.

## Revendications

1. Procédé pour surveiller et commander la nourriture non consommée dans des exploitations de pisciculture, comprenant l'étape consistant à positionner une caméra sous-marine (10) dans une cage flottante d'élevage de poissons (11) sous la zone d'élevage (12) des poissons pour prendre des images qui sont transmises à un ordinateur (16), ledit ordinateur comportant un logiciel de traitement d'image, dans lequel ladite caméra sous-marine est focalisée vers le haut, et ledit logiciel de traitement d'image interprète, analyse et discrimine les images de particules alimentaires non consommées (13) ayant certaines caractéristiques par rapport à un motif prédéfini, en quantifiant lesdites particules alimentaires non consommées en temps réel et en stoppant ou réduisant le débit d'alimentation lorsque la limite établie de particules alimentaires non consommées est dépassée.

2. Procédé selon la revendication 1, **caractérisé en ce que** ledit logiciel comporte un algorithme de forme et de texture pour discriminer les images de particule représentant un motif prédéfini de particules alimentaires non consommées.

3. Procédé selon la revendication 1, **caractérisé en ce qu'**il comporte l'étape consistant à commander la totalité du système d'alimentation automatique.

4. Procédé selon la revendication 1, **caractérisé en ce qu'**il comporte l'étape consistant à enregistrer la quantité d'aliments fournis en réalisant des rapports graphiques.

5. Procédé selon la revendication 4, **caractérisé en ce que** lesdits rapports peuvent être exportés par des moyens physiques et/ou à travers l'Internet.
